# EUROPEAN PATENT SPECIFICATION

(11) **EP 4 212 735 B1**
(45) Date of publication and mention of the grant of the patent: **02.09.2026**
(21) Application number: 22211515.6
(22) Date of filing: 05.12.2022
(51) Int. Cl.: F04D 29/10, F16J 15/44, F16J 15/447

(54) **MAGNETIC LEVITATING CENTRIFUGAL COMPRESSOR COMPRISING A MAGNETIC SEALING SYSTEM**
MAGNETSCHWEBE-ZENTRIFUGALVERDICHTER MIT EINEM MAGNETISCHEN DICHTUNGSSYSTEM
COMPRESSEUR CENTRIFUGE À SUSTENTATION MAGNÉTIQUE DOTÉ D'UN SYSTÈME D'ÉTANCHÉITÉ MAGNÉTIQUE

(30) Priority: 17.01.2022 CN 202210047178
(43) Date of publication of application: 19.07.2023
(73) Proprietor: Carrier Corporation, Palm Beach Gardens, FL 33418 (US)
(72) Inventor: LI, Jiedong, Shanghai, 201206 (CN); SISHTLA, Vishnu, Palm Beach Gardens, 33418 (US)
(74) Representative: Dehns

(56) References cited:
- WO-A1-2021/230909
- US-A- 5 137 286
- US-A1- 2004 126 226
- US-A1- 2009 015 012
- US-A1- 2014 035 231
- US-B1- 6 220 602
- US-B2- 7 952 247

## Description

### Field of the Invention

The present invention relates to the field of refrigeration technology, in particular to a magnetic levitating centrifugal compressor provided with a sealing system, and to a refrigeration system configured with said magnetic levitating centrifugal compressor.

### Background of the Invention

Currently, centrifugal compressors gradually adopt oil-free lubrication technology to replace the former oil circuit lubrication, thus eliminating the management of the lubricating oil system, such as oil circuit maintenance, oil return management and maintenance of the oil circuit system. On the other hand, oil-free lubrication also represents higher operating efficiency of compressor and higher operating efficiency of refrigeration system, lower vibration and noise, stable operation and much lower cost, cleaner and better customer experience.

Magnetic levitating bearings are an important way and means to solve the problem of oil-free lubrication of centrifugal compressors. A centrifugal compressor supported by magnetic levitating bearings consists of shell, volute, impeller, magnetic levitating bearings and high-speed motor and other parts. In the working process, the high-speed motor is supported by the magnetic levitating bearings at the left and right ends, with low rotary resistance and high rotational speed. In this type of bearing mechanism, there is often a touchdown bearing, which is designed to prevent damage of the magnetic levitating bearing part resulting from the collision of the magnetic levitating bearings with the motor shaft when the magnetic levitating bearings fail. Therefore, the radial clearance between the touchdown bearing and the motor shaft is typically smaller than the radial clearance between the magnetic levitating bearings and the motor shaft. For example, the radial clearance between the touchdown bearing and the motor shaft may be half of the radial clearance between the magnetic levitating bearings and the motor shaft. In addition, in order to prevent airflow from the impeller side entering into the motor cavity, a seal is provided between the impeller and the motor cavity, where said seal is typically a fixed labyrinth seal structure with teeth and fixed to the shell of the motor cavity. In order to avoid tooth damage due to collision between said motor shaft and said seal, the radial clearance between said seal and said motor shaft is designed to be relatively large, generally more than twice the touchdown bearing clearance. Thus, the sealing effect of said seal is relatively poor, and the amount of gas leaking from the impeller side is high, resulting in lower efficiency of the magnetic levitating centrifugal compressor.

US 2004/126226 A1 discloses a seal apparatus for providing a seal between inner and outer elements, including means for magnetically interacting with a first element to bias the seal relative to the first element.

US 5137286 A discloses a permanent magnet floating shaft seal.

US 6220602 B1 discloses a seal arrangement between relatively movable components including at least one magnet on a first component and at least one magnet on the second component.

WO 2021/230909 A1 discloses a floating ring seal for refrigerant compressor.

US 2009/015012 A1 discloses an axial in-line turbomachine.

US 2014/035231 A1 discloses an electrodynamically suspended seal.

### Summary of the Invention

According to the invention, there is provided a magnetic levitating centrifugal compressor as defined in claim 1. This system, or at least embodiments thereof, may effectively solve the above-mentioned problems and the problems of other aspects that exist in the prior art. Said magnetic levitating centrifugal compressor comprises a motor cavity, a motor shaft disposed within said motor cavity, and a sealing system. An end of said motor shaft extends out from said motor cavity and is mounted with an impeller. Said sealing system comprises: a seal, wherein said seal is sleeved on the outer side of said motor shaft and is disposed between said impeller and said motor cavity, for reducing the flow of fluid from said impeller to said motor cavity; a first magnet, wherein said first magnet is fixed at an outer surface of said motor shaft; and a second magnet, wherein said second magnet is fixed at a side of said seal facing said motor shaft; wherein said first magnet and said second magnet form a radial repulsive force in the radial direction of said motor shaft, so that said seal can be levitated relative to (in relation to) said motor shaft.

A tension spring is provided on top of said seal for resisting the gravity of said seal. One end of said tension spring rests against said seal and the other end of said tension spring rests against a housing. Said housing is fixedly connected to a shell of said motor cavity.

Alternatively, a compression spring is provided at the bottom of said seal for resisting the gravity of said seal. One end of said compression spring rests against said seal and the other end of said compression spring rests against the housing.

Optionally, there are a plurality of said first magnets and a plurality of said second magnets, wherein the plurality of said first magnets are arranged at an outer surface of said motor shaft at equal intervals along the circumferential direction of said motor shaft, and the plurality of said second magnets are arranged at equal intervals on a side of said seal facing said motor shaft.

Optionally, said motor shaft is provided with a sleeve, and said first magnets are fixed to said sleeve in an inserted manner.

Optionally, the plurality of said first magnets are fixed at the outer surface of said motor shaft by means of a carbon fiber tape in a winding manner.

Optionally, said sealing system further comprises an anti-rotation pin, wherein said anti-rotation pin is inserted between said seal and said housing for preventing said seal from rotating relative to said housing.

Optionally, there are a plurality of said anti-rotation pins, and the plurality of said anti-rotation pins are arranged at equal intervals in the circumferential direction of said seal.

Optionally, a side of said seal fits against said housing, and the fitting surfaces between said seal and said housing are provided with a wear resistant coating.

Optionally, said first magnet and said second magnet are radially magnetizing permanent magnets; or said first magnet and said second magnet are axially magnetizing permanent magnets.

In an embodiment, there is provided a refrigeration system, wherein said refrigeration system is configured with a magnetic levitating centrifugal compressor as described above, with any of the optional features.

It can be understood that the sealing system for a magnetic levitating centrifugal compressor may be of a follow-up construction, using mutually repulsive magnetic forces to enable the seal to be levitated relative to (in relation to) the motor shaft. As a result, the radial clearance between the seal of said sealing system and the motor shaft may be designed to be as small as possible without the use of additional tooling or special designs, further reducing the gas leakage from the impeller side.

### Brief Description of the Drawings

Certain exemplary embodiments will now be described in greater detail by way of example only and with reference to the accompanying drawings in which:
FIG. 1 illustrates a schematic cross-sectional view of a sealing system for a magnetic levitating centrifugal compressor;
FIG. 2 illustrates a schematic longitudinal sectional view of the sealing system for a magnetic levitating centrifugal compressor of FIG. 1;
FIG. 3 illustrates a schematic cross-sectional view of the sealing system for a magnetic levitating centrifugal compressor of FIG. 1 with the motor shaft falling onto the touchdown bearing; and
FIG. 4 illustrates a schematic cross-sectional view of a sealing system for a magnetic levitating centrifugal compressor in the case of using an axially magnetizing permanent magnet.

### Detailed Description of Specific Embodiments

Several embodiments will be described in detail below in connection with the accompanying drawings. It should be noted that the orientation terms such as up, down, left, right, front, back, inside, outside, top, bottom, etc., mentioned or may mentioned in this description are defined relative to the construction shown in each of the accompanying drawings, and they are relative concepts, and therefore may change accordingly depending on the different location and different state of use in which they are located. Therefore, these or other orientation terms should not be interpreted as restrictive terms.

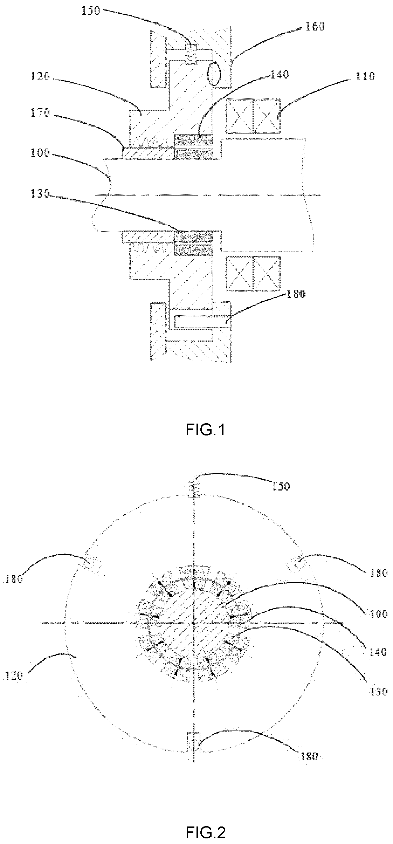

As shown in FIG. 1, it illustrates schematically in general terms the structure of one embodiment of a sealing system for a magnetic levitating centrifugal compressor. Said magnetic levitating centrifugal compressor includes a motor cavity (not shown) and a motor shaft 100. Said motor shaft 100 is located within said motor cavity and supported in rotation by a magnetic levitating bearing assembly. An end of said motor shaft 100 extends out from said motor cavity and is mounted with an impeller (not shown) and a touchdown bearing 110. Said magnetic levitating bearing assembly may include: a radial magnetic levitating bearing (not shown), an axially magnetic levitating bearing (not shown). There is a radial clearance between said touchdown bearing 110 and the motor shaft 100. The radial clearance is smaller than the radial clearance between the stator portion and the rotor stack of said radial magnetic levitating bearing (the rotor stack of said radial magnetic levitating bearing is fixedly mounted on the outer side of the motor shaft), thus avoiding collision between the rotor stack and the stator portion of said radial magnetic levitating bearing in the event of a stoppage or a sudden power failure of said magnetic levitating centrifugal compressor. Said touchdown bearing 110 may be in the form of a ball bearing. As can be clearly seen from FIGS 1 and 2, said sealing system comprises: a seal 120, a first magnet 130 and a second magnet 140. The seal 120, for example in the form of a labyrinth seal structure with teeth, is sleeved on the outer side of said motor shaft 100 and is disposed between said impeller and said motor cavity so as to reduce the flow of fluid from said impeller to said motor cavity. In general, there is a radial clearance between said seal 120 and the motor shaft 100. Said radial clearance is greater than the radial clearance existing between said touchdown bearing 110 and the motor shaft 100, so as to prevent tooth damage of the labyrinth seal structure due to collision of said seal with the motor shaft in case of stoppage or sudden power failure of said magnetic levitating centrifugal compressor.

In the above embodiment of the sealing system for magnetic levitating centrifugal compressor, said first magnet 130 is fixed at the outer surface of said motor shaft 100. Said second magnet 140 is fixed at a side of said seal 120 facing said motor shaft 100. Said first magnet 130 and said second magnet 140 form a radial repulsive force in the radial direction of said motor shaft 100 (as shown by the arrow in FIG. 2), e.g., the magnetic poles of the opposite sides of said first magnet 130 and said second magnet 140 are the same, enabling said seal 120 to be "levitated" on said motor shaft 100, thus preventing said seal 120, and in particular its toothed structure, from colliding with said motor shaft 100. The term "levitated" here refers to a state in which the seal 120 maintains a relatively stable interval with respect to the motor shaft 100. Preferably, the seal 120 and the motor shaft 100 maintain a concentric interval. Since said seal 120 is designed in a follow-up structure, i.e. said seal 120 can be levitated up and down with said motor shaft 100, the radial clearance between said seal and said motor shaft may be designed to be as small as possible, so as to further reduce the gas leakage from the back side of said impeller near said motor cavity.

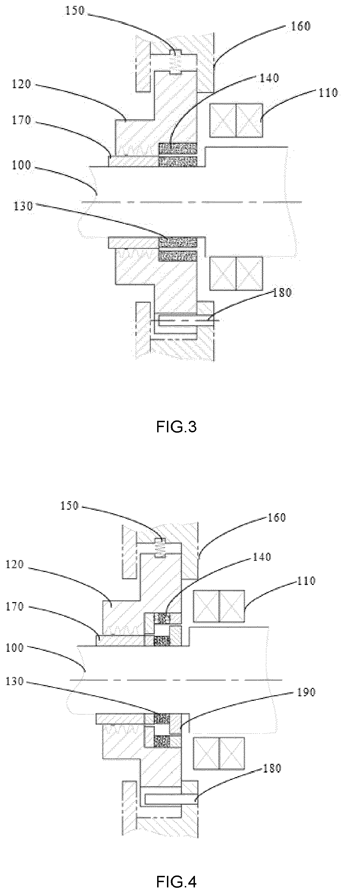

When said magnetic levitating centrifugal compressor is in normal operation, said motor shaft 100 is levitated and running at high speed, while said seal 120 remains concentrically arranged with said motor shaft 100 under the action of radial repulsive force, as shown in FIG. 1. When said magnetic levitating centrifugal compressor stops working or when there is a sudden power failure, said motor shaft 100 falls due to gravity and comes into contact with said touchdown bearing 110, as shown in FIG. 3. At this time, said seal 120 falls with said motor shaft 100 under the mutual repulsive force of said first magnet 130 and said second magnet 140, at which time the radial clearance between said seal 120 and said housing 160 at the top becomes larger and the radial clearance between said seal 120 and housing 160 at the bottom becomes smaller, while no contact occurs between said seal 120 and said motor shaft 100.

In order to be able to partially or even fully counteract the gravity of said seal 120 so as to keep said seal 120 and said motor shaft 100 as concentric as possible under the action of the repulsive force of the magnets, an extension spring 150 is provided at the top of said seal 120. One end of said extension spring 150 rests against said seal 120 and the other end of said extension spring 150 rests against the housing 160. Said housing 160 is fixedly connected to the shell (not shown) of said motor cavity. Alternatively, a compression spring is provided at the bottom of said seal. One end of said compression spring rests against said seal and the other end of said compression spring rests against said housing. Said housing is fixedly connected to the shell of said motor cavity.

In conjunction with the above embodiment, in other preferred embodiments, there are a plurality of said first magnet 130 and said second magnet 140, wherein the plurality of said first magnets 130 are arranged at an outer surface of said motor shaft 100 at equal intervals along the circumferential direction of said motor shaft 100, and the plurality of said second magnets 140 are arranged at equal intervals on a side of said seal 120 facing said motor shaft 100, as shown in FIG. 2. Further, said motor shaft 100 is provided with a sleeve 170, said sleeve 170 is for example tightly fitted to said motor shaft 100, and said first magnet 130 is fixed to said sleeve 170 in an inserted manner, thereby preventing said first magnets from flying out due to centrifugal force when the motor shaft is rotating. As an alternative, said plurality of first magnets are fixed at the outer surface of said motor shaft by means of carbon fiber tape in a winding manner.

With continued reference to FIG. 2, said sealing system further comprises an anti-rotation pin 180, wherein said anti-rotation pin 180 is inserted between said seal 120 and said housing 160 to prevent said seal 120 from rotating relative to said housing 160, i.e. said seal 120 can only be levitated up and down with said motor shaft 100. Further, there are a plurality of said anti-rotation pins 180 and said plurality of anti-rotation pins 180 are arranged at equal intervals in the circumferential direction of said seal 120.

It will be readily understood by those skilled in the art that typically the volute cavity in which said impeller is located is a high pressure area and said motor cavity is a low pressure area, so that the pressure on the side of said seal 120 near said impeller is always greater than the pressure on the side of said seal 120 near said motor cavity, causing friction due to the side of said seal 120 (on the right in the figure) abutting against said housing 160, as shown in the circled portion of FIG. 1. Thus, the wear-resistant coating may be provided on the fitting surfaces between said seal 120 and said housing 160. On the other hand, due to the friction, said seal will not be levitated when said motor shaft moves slightly, but only be moved with the motor shaft when the radial movement of the motor shaft exceeds a certain value, i.e. when the repulsive force on said seal exceeds the frictional force, and the certain value of radial movement must not exceed the sealing gap between said seal and said motor shaft surface.

As an example, said first magnet 130 and said second magnet 140 are radially magnetizing permanent magnets, as shown in FIGS. 1 and 3. By this time, the direction of the repulsive force between the first magnet 130 and the second magnet 140 is along the radial direction of the motor shaft 100. As an alternative, said first magnet 130 and said second magnet 140 are axially magnetizing permanent magnets, as shown in FIG. 4. By this time, the direction of the repulsive force between the first magnet 130 and the second magnet 140 is along the axial direction of the motor shaft 100. In order to enable the seal 120 to levitate relative to the motor shaft 100, the repulsive force in the axial direction needs to be converted into a repulsive force in the radial direction by the magnetic conductive ring 190 made of magnetic conductive metal. Compared with the radially magnetizing permanent magnet, the axially magnetizing permanent magnet has a simpler manufacturing process and lower cost.

Said magnetic levitating centrifugal compressor may be of a back-to-back two-stage compression design. Specifically, said magnetic levitating centrifugal compressor may comprise a motor cavity and a motor shaft located in said motor cavity, a first impeller and a second impeller, wherein said first impeller constitutes a low pressure stage of compression and said second impeller constitutes a high pressure stage of compression, said second impeller, i.e., the impeller of the second stage, being typically smaller than said first impeller, i.e., the impeller of the first stage, wherein the inlet of the impeller of the second stage is the outlet of the impeller of the first stage. Said motor shaft is located in said motor cavity and is supported by a magnetic levitating bearing assembly during rotation. Said motor shaft has a first end and a second end extending out from said motor cavity. Said first end of said motor shaft is mounted with a first impeller and a first touchdown bearing, and said second end of said motor shaft is mounted with a second impeller and a second touchdown bearing.

In the above embodiment of back-to-back two-stage compression, both of the first end and the second end of the motor shaft are provided with the sealing construction as shown in FIG. 1, 3 or 4. Specifically, said sealing system comprises: a first seal, a second seal, a first magnet assembly, and a second magnet assembly. Said first seal is sleeved on the outer side of said motor shaft 100 and is located between said first impeller and said motor cavity, thereby reducing the flow of fluid from said first impeller to said motor cavity. Said second seal is sleeved on the outside of said motor shaft and is located between said second impeller and said motor cavity, thereby reducing the flow of fluid from said second impeller to said motor cavity. Said first magnet assembly includes a first magnet 130 and a second magnet 140, said first magnet 130 is fixed at the outer surface of said motor shaft 100 and said second magnet 140 is fixed at a side of said first seal facing said motor shaft 100. Said second magnet assembly includes a third magnet and a fourth magnet, said third magnet is fixed at the outer surface of said motor shaft and said fourth magnet is fixed at a side of said second seal facing said motor shaft. Said first magnet and said second magnet form a repulsive force in the radial direction of said motor shaft and keep said first seal and said motor shaft in a concentric levitation, and said third magnet and said fourth magnet form a repulsive force in the radial direction of said motor shaft and keep said second seal and said motor shaft in a concentric levitation.

In summary, the sealing system for magnetic levitating centrifugal compressor is of a follow-up type construction, using the radial repulsive force between the magnets to keep the seal and the motor shaft in a concentric arrangement and to enable said seal to be levitated on said motor shaft. In this way, the radial clearance between the seal and the motor shaft becomes as small as possible without the use of additional tooling or special designs, and the gas leakage from the back side of said impeller near said motor cavity is further reduced.

According to the invention, a magnetic levitating centrifugal compressor is provided, which itself is provided with a sealing system as described according to various embodiments. In addition, a refrigeration system configured with said magnetic levitating centrifugal compressor is provided. Said refrigeration system may comprise a cooling tower, a cooling water unit and a pumping unit, etc. connected by piping, wherein said cooling water unit comprises a magnetic levitating centrifugal compressor, a condenser, a throttling device and an evaporator, etc. As pointed out in the above, by providing the above-mentioned magnetic levitating centrifugal compressor, the air tightness can be effectively improved without additional manufacturing cost. Thus, the efficiency of the magnetic levitating centrifugal compressor is further improved, and therefore it is recommended herein to use the above-mentioned magnetic levitating centrifugal compressor in all kinds of refrigeration systems.

The specific embodiments described above are intended only to describe more clearly the present invention, which is made easier to understand by clearly illustrating or describing the individual components. Without departing from the scope of the claims, the person skilled in the art may easily make various modifications or variations to the present invention. Therefore, it should be understood that these modifications or variations should be included within the scope of the claims.

## Claims

1. A magnetic levitating centrifugal compressor comprising a motor cavity, a motor shaft (100) disposed within said motor cavity, and a sealing system, wherein an end of said motor shaft (100) extends out from said motor cavity and is mounted with an impeller, wherein said sealing system comprises:
a seal (120), wherein said seal (120) is sleeved on the outer side of said motor shaft (100) and is disposed between said impeller and said motor cavity, for reducing the flow of fluid from said impeller to said motor cavity;
a first magnet (130), wherein said first magnet (130) is fixed at an outer surface of said motor shaft (100); and
a second magnet (140), wherein said second magnet (140) is fixed at a side of said seal (120) facing said motor shaft (100);
wherein said first magnet (130) and said second magnet (140) form a radial repulsive force in the radial direction of said motor shaft (100), so that said seal (120) can be levitated in relation to said motor shaft (100);
the sealing system further comprising:
a tension spring (150) provided on top of said seal (120) for resisting the gravity of said seal (120), wherein one end of said tension spring (150) rests against said seal (120) and the other end of said tension spring (150) rests against a housing (160), and said housing (160) is fixedly connected to a shell of said motor cavity;
or a compression spring provided at the bottom of said seal (120) for resisting the gravity of said seal (120), wherein one end of said compression spring rests against said seal (120) and the other end of said compression spring rests against the housing (160).

2. The magnetic levitating centrifugal compressor according to claim 1,
**characterized in that** there are a plurality of said first magnets (130) and a plurality of said second magnets (140), wherein the plurality of said first magnets (130) are arranged at an outer surface of said motor shaft (100) at equal intervals along the circumferential direction of said motor shaft (100), and the plurality of said second magnets (140) are arranged at equal intervals on a side of said seal (120) facing said motor shaft (100).

3. The magnetic levitating centrifugal compressor according to claim 2, **characterized in that** said motor shaft (100) is provided with a sleeve (170), and said first magnets (130) are fixed to said sleeve (170) in an inserted manner.

4. The magnetic levitating centrifugal compressor according to claim 2, **characterized in that** the plurality of said first magnets (130) are fixed at the outer surface of said motor shaft (100) by means of a carbon fiber tape in a winding manner.

5. The magnetic levitating centrifugal compressor according to claim 1, **characterized in that** said sealing system further comprises an anti-rotation pin (180), wherein said anti-rotation pin (180) is inserted between said seal (120) and said housing (160) for preventing said seal (120) from rotating relative to said housing (160).

6. The magnetic levitating centrifugal compressor according to claim 5, **characterized in that** there are a plurality of said anti-rotation pins (180), and the plurality of said anti-rotation pins (180) are arranged at equal intervals in the circumferential direction of said seal (120).

7. The magnetic levitating centrifugal compressor according to claim 1, **characterized in that**, a side of said seal (120) fits against said housing (160), and the fitting surfaces between said seal (120) and said housing (160) are provided with a wear resistant coating.

8. The magnetic levitating centrifugal compressor according to claim 1, **characterized in that**, said first magnet (130) and said second magnet (140) are radially magnetizing permanent magnets; or **in that** said first magnet (130) and said second magnet (140) are axially magnetizing permanent magnets.

9. A refrigeration system, **characterized in that** said refrigeration system is configured with the magnetic levitating centrifugal compressor according to claim 1.

10. A magnetic levitating centrifugal compressor according to claim 1, wherein:
said motor shaft (100) is supported in rotation by a magnetic levitating bearing assembly;
the end of said motor shaft (100) that extends out from said motor cavity is mounted with a touchdown bearing (110);
the magnetic levitating bearing assembly includes a radial magnetic levitating bearing and an axially magnetic levitating bearing;
there is a radial clearance between said touchdown bearing (110) and the motor shaft (100), which is smaller than a radial clearance between a stator portion and a rotor stack of said radial magnetic levitating bearing;
the rotor stack of said radial magnetic levitating bearing is fixedly mounted on the outer side of the motor shaft.

11. A magnetic levitating centrifugal compressor according to claim 10, wherein there is a radial clearance between said seal (120) and the motor shaft (100), said radial clearance being greater than the radial clearance existing between said touchdown bearing (110) and the motor shaft (100).

## Patentansprüche

1. Magnetschwebe-Zentrifugalverdichter, umfassend einen Motorhohlraum, eine Motorwelle (100), die innerhalb des Motorhohlraums angeordnet ist, und ein Dichtungssystem, wobei sich ein Ende der Motorwelle (100) aus dem Motorhohlraum heraus erstreckt und mit einem Laufrad montiert ist, wobei das Dichtungssystem Folgendes umfasst:
eine Dichtung (120), wobei die Dichtung (120) auf die Außenseite der Motorwelle (100) aufgesteckt ist und zwischen dem Laufrad und dem Motorhohlraum angeordnet ist, zum Reduzieren des Flusses von Fluid von dem Laufrad zu dem Motorhohlraum;
einen ersten Magneten (130), wobei der erste Magnet (130) an einer Außenfläche der Motorwelle (100) befestigt ist; und
einen zweiten Magneten (140), wobei der zweite Magnet (140) an einer Seite der Dichtung (120) befestigt ist, die der Motorwelle (100) zugewandt ist;
wobei der erste Magnet (130) und der zweite Magnet (140) eine radiale Abstoßungskraft in der radialen Richtung der Motorwelle (100) bilden, so dass die Dichtung (120) in Bezug auf die Motorwelle (100) zum Schweben gebracht werden kann;
wobei das Dichtungssystem ferner Folgendes umfasst:
eine Zugfeder (150), die oben auf der Dichtung (120) vorgesehen ist, zum Entgegenwirken der Schwerkraft der Dichtung (120), wobei ein Ende der Zugfeder (150) an der Dichtung (120) anliegt und das andere Ende der Zugfeder (150) an einem Gehäuse (160) anliegt, und das Gehäuse (160) fest mit einer Hülle des Motorhohlraums verbunden ist; oder
eine Druckfeder, die an der Unterseite der Dichtung (120) vorgesehen ist, zum Entgegenwirken der Schwerkraft der Dichtung (120), wobei ein Ende der Druckfeder an der Dichtung (120) anliegt und das andere Ende der Druckfeder an dem Gehäuse (160) anliegt.

2. Magnetschwebe-Zentrifugalverdichter nach Anspruch 1, **dadurch gekennzeichnet, dass** es eine Vielzahl der ersten Magneten (130) und eine Vielzahl der zweiten Magneten (140) gibt, wobei die Vielzahl der ersten Magneten (130) an einer Außenfläche der Motorwelle (100) in gleichen Abständen entlang der Umfangsrichtung der Motorwelle (100) angeordnet ist, und die Vielzahl der zweiten Magneten (140) in gleichen Abständen an einer Seite der Dichtung (120) angeordnet ist, die der Motorwelle (100) zugewandt ist.

3. Magnetschwebe-Zentrifugalverdichter nach Anspruch 2, **dadurch gekennzeichnet, dass** die Motorwelle (100) mit einer Hülse (170) versehen ist, und die ersten Magneten (130) an der Hülse (170) in einer eingefügten Weise befestigt sind.

4. Magnetschwebe-Zentrifugalverdichter nach Anspruch 2, **dadurch gekennzeichnet, dass** die Vielzahl der ersten Magneten (130) an der Außenfläche der Motorwelle (100) mittels eines Kohlefaserbandes in einer wickelnden Weise befestigt ist.

5. Magnetschwebe-Zentrifugalverdichter nach Anspruch 1, **dadurch gekennzeichnet, dass** das Dichtungssystem ferner einen Verdrehsicherungsstift (180) umfasst, wobei der Verdrehsicherungsstift (180) zwischen der Dichtung (120) und dem Gehäuse (160) eingefügt ist, zum Verhindern, dass die Dichtung (120) relativ zu dem Gehäuse (160) rotiert.

6. Magnetschwebe-Zentrifugalverdichter nach Anspruch 5, **dadurch gekennzeichnet, dass** es eine Vielzahl der Verdrehsicherungsstifte (180) gibt, und die Vielzahl der Verdrehsicherungsstifte (180) in gleichen Abständen in der Umfangsrichtung der Dichtung (120) angeordnet ist.

7. Magnetschwebe-Zentrifugalverdichter nach Anspruch 1, **dadurch gekennzeichnet, dass**, eine Seite der Dichtung (120) an dem Gehäuse (160) anliegt, und die Passflächen zwischen der Dichtung (120) und dem Gehäuse (160) mit einer verschleißfesten Beschichtung versehen sind.

8. Magnetschwebe-Zentrifugalverdichter nach Anspruch 1, **dadurch gekennzeichnet, dass**, der erste Magnet (130) und der zweite Magnet (140) radial magnetisierende Permanentmagnete sind; oder dass der erste Magnet (130) und der zweite Magnet (140) axial magnetisierende Permanentmagnete sind.

9. Kühlsystem, **dadurch gekennzeichnet, dass** das Kühlsystem mit dem Magnetschwebe-Zentrifugalverdichter nach Anspruch 1 konfiguriert ist.

10. Magnetschwebe-Zentrifugalverdichter nach Anspruch 1, wobei:
die Motorwelle (100) bei Rotation durch eine Magnetschwebe-Lageranordnung gestützt wird;
das Ende der Motorwelle (100), das sich aus dem Motorhohlraum heraus erstreckt, mit einem Fanglager (110) montiert ist;
die Magnetschwebe-Lageranordnung ein radiales Magnetschwebelager und ein axiales Magnetschwebelager beinhaltet;
es einen radialen Abstand zwischen dem Fanglager (110) und der Motorwelle (100) gibt, der kleiner als ein radialer Abstand zwischen einem Statorabschnitt und einem Rotorpaket des radialen Magnetschwebelagers ist;
das Rotorpaket des radialen Magnetschwebelagers fest an der Außenseite der Motorwelle montiert ist.

11. Magnetschwebe-Zentrifugalverdichter nach Anspruch 10, wobei es einen radialen Abstand zwischen der Dichtung (120) und der Motorwelle (100) gibt, wobei der radiale Abstand größer als der radiale Abstand ist, der zwischen dem Fanglager (110) und der Motorwelle (100) existiert.

## Revendications

1. Compresseur centrifuge à lévitation magnétique comprenant une cavité de moteur, un arbre moteur (100) disposé à l'intérieur de ladite cavité de moteur et un système d'étanchéité, une extrémité dudit arbre moteur (100) s'étendant hors de ladite cavité de moteur et étant montée avec une roue à aubes, ledit système d'étanchéité comprenant :
un joint (120), ledit joint (120) étant gainé sur le côté extérieur dudit arbre moteur (100) et disposé entre ladite turbine et ladite cavité moteur, pour réduire le débit de fluide de ladite turbine vers ladite cavité moteur ;
un premier aimant (130), ledit premier aimant (130) étant fixé sur une surface extérieure dudit arbre moteur (100) ; et
un deuxième aimant (140), ledit deuxième aimant (140) étant fixé sur un côté dudit joint (120) faisant face audit arbre moteur (100) ;
ledit premier aimant (130) et ledit deuxième aimant (140) formant une force de répulsion radiale dans la direction radiale dudit arbre moteur (100), de sorte que ledit joint (120) puisse être en lévitation par rapport audit arbre moteur (100) ;
le système d'étanchéité comprenant en outre :
un ressort de tension (150) prévu au-dessus dudit joint (120) pour résister à la gravité dudit joint (120), une extrémité dudit ressort de tension (150) reposant contre ledit joint (120) et l'autre extrémité dudit ressort de tension (150) reposant contre un boîtier (160), ledit boîtier (160) étant fixé à une enveloppe de ladite cavité du moteur ; ou
un ressort de compression prévu au bas dudit joint (120) pour résister à la gravité dudit joint (120), une extrémité dudit ressort de compression reposant contre ledit joint (120) et l'autre extrémité dudit ressort de compression reposant contre le boîtier (160).

2. Compresseur centrifuge à lévitation magnétique selon la revendication 1, **caractérisé en ce qu'**il existe une pluralité desdits premiers aimants (130) et une pluralité desdits deuxièmes aimants (140), la pluralité desdits premiers aimants (130) étant agencés sur une surface extérieure dudit arbre moteur (100) à intervalles égaux le long de la direction circonférentielle dudit arbre moteur (100), et la pluralité desdits deuxièmes aimants (140) étant agencés à intervalles égaux sur un côté dudit joint (120) faisant face audit arbre moteur (100).

3. Compresseur centrifuge à lévitation magnétique selon la revendication 2, **caractérisé en ce que** ledit arbre moteur (100) est muni d'un manchon (170), et lesdits premiers aimants (130) sont fixés audit manchon (170) de manière insérée.

4. Compresseur centrifuge à lévitation magnétique selon la revendication 2, **caractérisé en ce que** la pluralité desdits premiers aimants (130) sont fixés à la surface extérieure dudit arbre moteur (100) au moyen d'un ruban de fibre de carbone de manière enroulée.

5. Compresseur centrifuge à lévitation magnétique selon la revendication 1, **caractérisé en ce que** ledit système d'étanchéité comprend en outre une goupille anti-rotation (180), ladite goupille anti-rotation (180) étant insérée entre ledit joint (120) et ledit boîtier (160) pour empêcher ledit joint (120) de tourner par rapport audit boîtier (160).

6. Compresseur centrifuge à lévitation magnétique selon la revendication 5, **caractérisé en ce qu'**il existe une pluralité desdites goupilles anti-rotation (180), et la pluralité desdites goupilles anti-rotation (180) sont agencées à intervalles égaux dans la direction circonférentielle dudit joint (120).

7. Compresseur centrifuge à lévitation magnétique selon la revendication 1, **caractérisé en ce qu'**un côté dudit joint (120) s'adapte contre ledit boîtier (160), et les surfaces de contact entre ledit joint (120) et ledit boîtier (160) sont munies d'un revêtement résistant à l'usure.

8. Compresseur centrifuge à lévitation magnétique selon la revendication 1, **caractérisé en ce que** ledit premier aimant (130) et ledit deuxième aimant (140) sont des aimants permanents à magnétisation radiale ; ou **en ce que** ledit premier aimant (130) et ledit deuxième aimant (140) sont des aimants permanents à magnétisation axiale.

9. Système de réfrigération, **caractérisé en ce que** ledit système de réfrigération est configuré avec le compresseur centrifuge à lévitation magnétique selon la revendication 1.

10. Compresseur centrifuge à lévitation magnétique selon la revendication 1, dans lequel :
ledit arbre moteur (100) est soutenu en rotation par un ensemble de paliers à lévitation magnétique ;
l'extrémité dudit arbre moteur (100) qui s'étend hors de ladite cavité de moteur est montée avec un palier d'appui (110) ;
l'ensemble de palier à lévitation magnétique comprend un palier à lévitation magnétique radiale et un palier à lévitation magnétique axiale ;
il existe un jeu radial entre ledit palier d'appui (110) et l'arbre moteur (100), qui est inférieur à un jeu radial entre une partie du stator et un empilement de rotor dudit palier à lévitation magnétique radiale ;
l'empilement de rotor dudit palier à lévitation magnétique radiale est fixé de manière fixe sur le côté extérieur de l'arbre moteur.

11. Compresseur centrifuge à lévitation magnétique selon la revendication 10, dans lequel il existe un jeu radial entre ledit joint (120) et l'arbre moteur (100), ledit jeu radial étant supérieur au jeu radial existant entre ledit palier d'appui (110) et l'arbre moteur (100).
